# EUROPEAN PATENT APPLICATION

(11) **EP 4 818 487 A1**
(43) Date of publication of application: **07.10.2026**
(21) Application number: 26171025.5
(22) Date of filing: 07.04.2026
(51) Int. Cl.: F02C 3/10, F01D 17/04

(54) **A TURBOSHAFT GEARBOX OUTPUT GEAR ARRANGEMENT WITH TORQUE MEASUREMENT SYSTEM**

(30) Priority: 03.04.2025 US 202519169401
(71) Applicant: Pratt & Whitney Canada Corp., Longueuil, Québec J4G 1A1 (CA)
(72) Inventor: LANDRY-DROLET, Guillaume, Longueuil, J4G 1A1 (01BE5) (CA); DESJARDINS, Michel, Longueuil, J4G 1A1 (01BE5) (CA)
(74) Representative: Dehns

(57) **Abstract**

A turboshaft gearbox output gear arrangement (100) of a gas turbine engine, having: a power turbine shaft (110); a torque shaft (120), driven by the power turbine shaft (110), extending from a forward end (120F) to an aft end (120A); a gear shaft (122), driven by the torque shaft (120); a mating gear (125), driven by the gear shaft (122), wherein the mating gear (125) and gear shaft (122) define a gear mesh plane (127); a reference tube (130), coupled to the torque shaft (120), extending from a forward end (130F) to an aft end (130A), wherein the forward and aft ends of the reference tube (130) and torque shaft (120) extend along each side of the gear mesh plane (127); and a sensor (140D) that engages the reference tube (130) and the torque shaft (120) to measure twist in the torque shaft (120), wherein angular movement of the reference tube (130) relative to the torque shaft (120) is indicative of torque reacted in the torque shaft (120).

## Description

### BACKGROUND

Exemplary embodiments of the invention pertain to the art of turboshafts and more specifically to a turboshaft gearbox output gear arrangement with a torque sensor.

A turboshaft gearbox output arrangement may drive, as example, a rotor of a helicopter. The arrangement may include a torque shaft that drives a gear shaft, which in turn drives the rotor through a mating gear driven by the gear shaft. Measuring the angular deflection as reacted by the torque shaft is helpful to determine the torque provided by the engine and delivered to the helicopter rotor. In addition, the arrangement may include a power turbine shaft that is driven by an engine, and which drives the torque shaft. The latter may be used to convey pressurized air to cool the critical engine components to maintain optima engine operating conditions.

### BRIEF DESCRIPTION

According to a first aspect of the invention, a turboshaft gearbox output gear arrangement (a first arrangement) of a gas turbine engine includes: a power turbine shaft; a torque shaft, driven by the power turbine shaft, extending from a forward end to an aft end; a gear shaft, driven by the torque shaft; a mating gear, driven by the gear shaft, wherein the mating gear and gear shaft define a gear mesh plane; a reference tube, coupled to the torque shaft, extending from a forward end to an aft end, wherein the forward and aft ends of the reference tube and torque shaft extend along each side of the gear mesh plane; and a sensor that engages the reference tube and the torque shaft to measure twist in the torque shaft, wherein angular movement of the reference tube relative to the torque shaft is indicative of torque reacted in the torque shaft.

In an embodiment of the above, the power turbine shaft defines: an aft end that is driven, or configured to be drivable, by an engine; a forward end that is coupled to the torque shaft; a cooling air passage, located between the aft end and the forward end of the power turbine shaft, extending radially through the power turbine shaft.

In an embodiment of any of the above, the first arrangement includes a power turbine shaft bearing seated against the power turbine shaft, between the cooling air passage and the aft end of the power turbine shaft.

In an embodiment of any of the above, the aft end of the torque shaft is coupled to the forward end of the power turbine shaft.

In an embodiment of any of the above, the first arrangement includes a phonic wheel having interlacing teeth that couples the aft end of the reference tube and the torque shaft, wherein: the sensor engages the interlacing teeth of the phonic wheel, the aft end of the torque shaft is coupled to the forward end of the power turbine shaft; the forward end of the torque shaft is forward of the mating gear; and the gear shaft extends from a forward end to an aft end, wherein the aft end of the gear shaft is forward of the phonic wheel or interlacing teeth; and the torque shaft and the gear shaft are coupled to each other forward of the mesh plane or mating gear; a radial shaft gap is defined between the aft end of the torque shaft and the aft end of the gear shaft; and the reference tube is located within the radial shaft gap.

In an embodiment of any of the above, the reference tube extends between: a forward end that is within the radial shaft gap and connected to a first portion of the torque shaft that is forward of the mating gear; and an aft end that is axially aft of the aft end of the gear shaft and axially aligned with a second portion of the torque shaft that is aft of the mating gear, wherein the aft end of the reference tube and the second portion of the torque shaft are engaged via the interlacing teeth of the phonic wheel.

In an embodiment of any of the above, the forward end of the reference tube and the first portion of the torque shaft are connected to each other.

In an embodiment of any of the above, the first arrangement includes a first forward gear shaft bearing located axially forward of the mating gear and forward of the phonic wheel; and an aft gear shaft bearing located axially aft of the mating gear and forward of the phonic wheel.

In an embodiment of any of the above, the first arrangement includes a housing surrounding the torque shaft and extending from a forward end that is forward of the first forward gear bearing and an aft end that is aft of the cooling air passage and forward of the power turbine shaft bearing.

In an embodiment of any of the above, the first arrangement includes at least one of: an engine that drives the power turbine shaft; and a rotor, driven by the mating gear.

According to another aspect of the invention, a turboshaft gearbox output gear arrangement (a second arrangement) of a gas turbine engine includes: a power turbine shaft; a torque shaft, extending from a forward end to an aft end, driven by the power turbine shaft; a gear shaft, extending from a forward end to an aft end, driven by the torque shaft; a mating gear, driven by the gear shaft, wherein the mating gear defines a gear mesh plane, and wherein the forward and aft ends of the torque and gear shafts extend on each side of the gear mesh plane; and a sensor that engages the gear shaft and the torque shaft to measure twist in the torque shaft, wherein angular movement of the gear shaft relative to the torque shaft is indicative of torque reacted in the torque shaft.

In an embodiment of the above, the power turbine shaft defines: an aft end that is driven, or drivable, by an engine; a forward end that is coupled to the torque shaft; a cooling air passage, located between the aft end and the forward end of the power turbine shaft, extending radially through the power turbine shaft.

In an embodiment of any of the above, the second arrangement includes a power turbine shaft bearing seated against the power turbine shaft, between the cooling air passage and the aft end of the power turbine shaft.

In an embodiment of any of the above, the aft end of the torque shaft is coupled to the power turbine shaft.

In an embodiment of any of the above, the second arrangement includes a phonic wheel having interlacing teeth that couples the aft end of the gear shaft and the torque shaft, wherein the sensor engages at the interlacing teeth of the phonic wheel, the aft end of the torque shaft is coupled to the power turbine shaft; and the forward end of the torque shaft is forward of the mating gear; and the aft end of the gear shaft engages the aft end of the torque shaft via the interlacing teeth of the phonic wheel; and the torque shaft and the gear shaft are coupled to each other forward of the mesh plane or mating gear.

In an embodiment of any of the above, the second arrangement includes a first forward gear shaft bearing located axially forward of the mating gear and forward of the phonic wheel; and an aft gear shaft bearing located axially aft of the mating gear and forward of the phonic wheel

In an embodiment of any of the above, the second arrangement includes a housing surrounding the torque shaft and extending from a forward end that is forward of the first forward gear bearing and an aft end that is aft of the cooling air passage.

In an embodiment of any of the above, the second arrangement includes at least one of: an engine that drives the power turbine shaft; and a rotor, driven by the mating gear.

According to another aspect of the invention, a method of operating a turboshaft gearbox output gear arrangement of a gas turbine engine includes: driving a power turbine shaft, to thereby drive a torque shaft and a gear shaft that are operationally coupled to one another, and to thereby drive a mating gear driven by the gear shaft; measuring a phase shift between a first portion of the torque shaft that is forward of a mesh plane of the mating gear and a second portion of the torque shaft that is aft of the mesh plane utilizing a sensor; and determining a torque on the torque shaft from the phase shift.

In an embodiment of the above, measuring the phase shift between the first portion and the second portion of the torque shaft includes measuring relative angular displacement between the second portion of the torque shaft and either a reference tube connected to the torque shaft or a reference tube portion of the gear shaft.

In an embodiment of any of the above, the method includes circulating cooling air through a cooling air passage, defined in the power turbine shaft, that is located between power turbine shaft bearing and an end of the power turbine shaft that mates with the torque shaft.

In an embodiment of any of the above, driving the power turbine shaft further includes at least one of: driving the power turbine shaft with a gas turbine engine; and driving a rotor through the mating gear.

### BRIEF DESCRIPTION OF THE DRAWINGS

The following descriptions should not be considered limiting in any way. With reference to the accompanying drawings, like elements are numbered alike:
FIG. 1 is a cross-section of an engine that may be utilized with the disclosed embodiments;
FIG. 2 is a turboshaft gearbox output gear arrangement, with a torque sensor, and a cooling air passage for delivering cooling air to the engine, according to an embodiment in which a reference tube coupled to the torque shaft, and where reference tube and torque shaft interlacing teeth are forming a phonic wheel that generates a signal when passing the torque sensor;
FIG. 3 is a turboshaft gearbox output gear arrangement, with a torque sensor, and a cooling air passage for delivering cooling air to the engine, according to an embodiment in which a gear shaft and torque shaft interlacing teeth are forming a phonic wheel that generates a signal when passing the torque sensor; and
FIG. 4 is a flowchart for operating a turboshaft gearbox output gear arrangement, according to an embodiment.

### DETAILED DESCRIPTION

A detailed description of one or more embodiments of the disclosed apparatus and method are presented herein by way of exemplification and not limitation with reference to the Figures.

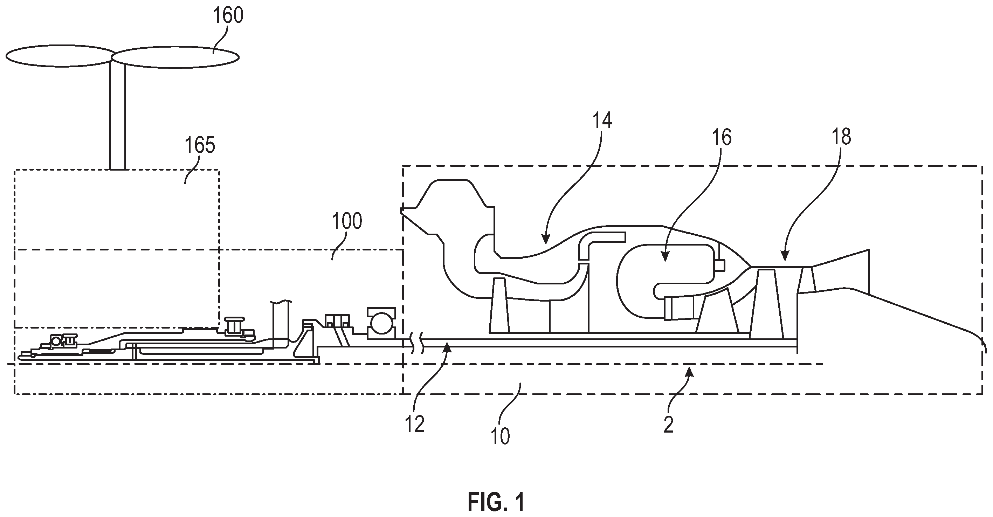

Fig. 1 illustrates an aircraft engine 10 of a type preferably provided for use in subsonic flight, generally comprising a shaft 12 operatively connectable to a fan or other rotor, such as a helicopter rotor, for propelling ambient air, a compressor section 14 for pressurizing ambient air, a combustor 16 in which the compressed air is mixed with fuel and ignited for generating an annular stream of hot combustion gases, and a turbine section 18 for extracting energy from the combustion gases. Components of the engine 10 are rotatable about a longitudinal center axis 2 of the engine 10. In the present embodiment, the engine 10 is a turboshaft engine. It is contemplated that the engine 10 could be a different type of engine, such as a rotary engine, a turboprop, or a turbofan engine for example. A gearbox arrangement 100 is shown, which drives a rotor 160, which may be a helicopter rotor, via a rotor gearbox 165, which may be a helicopter gearbox.

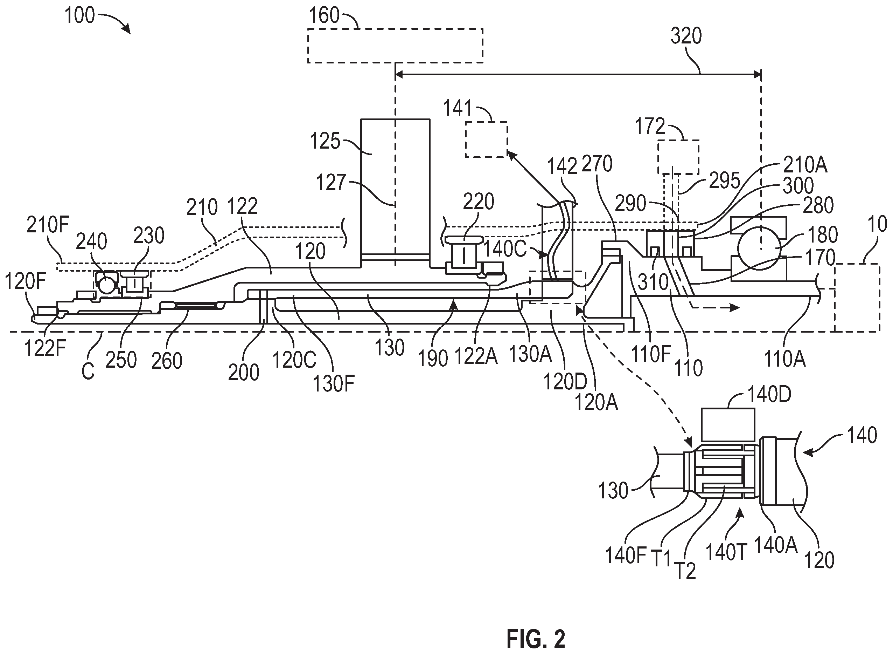

Turning to FIG. 2, disclosed is a turboshaft gearbox output gear arrangement 100 (a first arrangement or system), illustrated about its center axis C (i.e., axis 2 in FIG. 1). The arrangement 100 includes a power turbine shaft 110. A torque shaft 120 is driven by the power turbine shaft 110. A gear shaft 122 is driven by the torque shaft 120. A mating gear 125 is driven by the gear shaft 122. The mating gear 125 and gear shaft 122 mesh along a gear mesh middle plane 127. A reference tube 130 is coupled to the torque shaft 120 on one end. The reference tube 130 may be a full hoop structure or may have pockets/holes where elements of the phonic wheel 140, discussed below, are located. The mesh plane is between the ends of the torque shaft and reference tube. That is, the ends of the torque shaft and reference tube extend along each side of the mesh plane.

A phonic wheel 140 engages a sensor 140D (e.g., a proximity probe), the reference tube 130 and the torque shaft 120 provide a set of interlacing teeth 140T (i.e. phonic wheel) to measure twist in torque shaft 120. A phonic wheel is a device that includes a rotating wheel, typically with evenly spaced teeth or notches. It is designed to trigger or activate a sensor, allowing for precise timing or measurement of rotational speed. The teeth on the phonic wheel are detected by the sensor, producing a signal which can be used for various applications, such as monitoring the speed of rotating components.

Rotation of the reference tube 130 teeth relative to torque shaft 120 teeth is indicative of torque reacted in the torque shaft 120. The power turbine shaft 110 is driven by an engine 10, which may be a gas turbine engine utilized in an aerospace application, and the mating gear 125 drives a helicopter rotor 160. In some embodiments, there may be additional gears, i.e. an additional gearbox, between the mating gear and the rotor.

The power turbine shaft 110 defines an aft end 110A and a forward end 110F. The aft end 110A of the power turbine shaft 110 is driven by the engine 10. The forward end 110F of the power turbine shaft 110 is couped to the torque shaft 120. A cooling air passage 170 is located intermediate, e.g., between, the aft end 110A and the forward end 110F of the power turbine shaft 110. The cooling air passage 170 extends radially through the power turbine shaft 110. A power turbine shaft bearing 180 is seated against the power turbine shaft 110. Specifically, the power turbine shaft bearing 180 is seated axially between the cooling air passage 170 and the aft end of the power turbine shaft 110.

The torque shaft 120 defines an aft end 120A and a forward end 120F. The aft end 120A of the torque shaft 120 is coupled to the forward end 110F of the power turbine shaft 110. The forward end 120F of the torque shaft 120 is forward of the mating gear 125. The gear shaft 122 defines an aft end 122A and a forward end 122F. The aft end 122A of the gear shaft 122 is forward of the aft end 120A of the torque shaft 120. The forward end 122F of the gear shaft 122 and the forward end 120F of the torque shaft 120 are both forward of the coupling 260. The torque shaft 120 and gear shaft 122 are coupled to each other in rotation at the coupling 260. A radial shaft gap 190 is defined between the inner surface of gear shaft 122 and the outer surface of torque shaft 120. The reference tube 130 is located within the radial shaft gap 190.

The reference tube 130 extends between a forward end 130F and an aft end 130A. The forward end 130F of the reference tube 130 is within the radial shaft gap 190 and is connected to a first portion 120C of the torque shaft 120 that is axially forward of the mating gear 125. The aft end 130A of the reference tube 130 is axially aft of the aft end 122A of the gear shaft 122 and is axially aligned with a second portion 120D of the torque shaft 120 that is axially aft of the mating gear 125. The aft end 130A of the reference tube 130 is engaged with the second portion 120D of the torque shaft 120 thus creating the phonic wheel 140. Torque shaft 120 extends axially past the gear mesh plane 127 to have sufficient length, resulting in sufficient angular twist for torque measuring utilizing the via phonic wheel 140, as discussed in greater detail below.

The forward end 130F of the reference tube 130 and the first portion 120C of the torque shaft 120 are connected to each other via a coupling pin 200. A housing 210 surrounds the torque shaft 120 and extends from a forward end 210F to an aft end 210A. The housing 210 surrounds the arrangement 100. As shown in the figure, the housing 210 is interrupted, i.e., it has an aperture, for the gear shaft 122 and the mating gear 125 to mesh, i.e. for the mating gear 125 to be driven by the gear shaft 122. The forward end 210F of the housing 210 is axially forward of the forward bearing 230, 240. The aft end 210A of the housing 210 is aft of the cooling air passage 170 and forward of the power turbine shaft bearing 180. An aft gear shaft bearing 220 is located axially aft of the mating gear 125 and axially forward of the phonic wheel 140. The aft gear shaft bearing 220 is radially between the aft end 122A of the gear shaft 122 and the housing 210. The aft gear shaft bearing 220 may be a roller bearing. It is to be appreciated that the aspects of the housing 210 disclosed herein are not intended on limiting the scope of the embodiments.

A first forward gear shaft bearing 230 is located radially between the forward end 122F of the gear shaft 122 and the housing 210. The first forward gear shaft bearing 230 may be a roller bearing. A second forward gear shaft bearing 240 is located radially between the forward end 122F of the gear shaft 122 and the housing 210. The second forward gear shaft bearing 240 is axially forward of the first forward gear shaft bearing 230. The second forward gear shaft bearing 240 may be a ball bearing. The second forward gear shaft bearing 240 may be required if the gear shaft 122 is subjected to axial loading. The first forward gear shaft bearing 230 and second forward gear shaft bearing 240 can be installed on the gear shaft 122 or the torque shaft 120. The first forward gear shaft bearing 230 and the second forward gear shaft bearing 240 may be located anywhere between gear mesh plane 127 and the torque shaft forward end 120F. The first forward gear shaft bearing 230 and aft gear shaft bearing 220 are on each axial side of the gear mesh plane 127 and provide radial support. In one embodiment, bearings 230 and 220 are roller bearings and provide radial support. Bearing 240 is a ball bearing and is utilized if the gear shaft is subject to axial loading. In one embodiment, the first forward gear shaft bearing 230 and second forward gear shaft bearing 240 are a single forward bearing 250 (shown schematically), such as a ball bearing.

In one embodiment, the gear shaft 122 and the torque shaft 120 are coupled via a forward shaft coupling 260. The forward shaft coupling 260 may be a spline. The forward shaft coupling 260 is located axially forward of the gear mesh plane 127 and forward of the first portion 120C of the torque shaft 120 or forward of the coupling pin 200, and transfers torque to the gear shaft 122.

In one embodiment, the aft end 120A of the torque shaft 120 and the forward end 110F of the power turbine shaft 110 are coupled via an aft shaft coupling 270. The aft shaft coupling 270 also may be a spline. The aft shaft coupling 270 transmits torque from the power turbine shaft 110 to the torque shaft 120.

In one embodiment, a seal housing 280 extends radially between the power turbine shaft 110 and the housing 210 and is axially aligned, i.e., located over, the cooling air passage 170. The housing 210 defines an aperture 290 and the seal housing 280 defines a housing air passage 300 that are axially aligned. Dynamic sealing elements 310 such as controlled gaps, lip seals, etc., or an o-ring, may provide a seal between the seal housing 280 and the power turbine shaft 110. In case of seals using a controlled gap, small amount of air would be leaking on each side of the seal elements. An air tube 295 may extend away from the aperture 290. With this configuration, pressurized air, e.g., from a pressurized air source 172, is capable of being delivered through the cooling air passage 170 to cool the engine 10, and provide sealing air in the case of a controlled gap seal. According to the embodiments, the phonic wheel 140 includes an aft portion 140A connected to the second portion 120D of the torque shaft 120. A forward portion 140F of the phonic wheel 140 is connected to the aft end 130A of the reference tube 130, which does not deform from torque but is angularly displaced due to the deformation of the torque shaft. In one embodiment the forward portion 140F of the phonic wheel 140 is formed as part of the aft end 130A of the reference tube 130. The forward portion 140F and aft portion 140A of the phonic wheel 140 have interlacing teeth 140T (i.e., they form a phonic wheel), which are axially engaged, e.g., teeth T1 and teeth T2. Relative angular movement between the interlacing teeth 140T is indicative of rotation of the reference tube 130, and twist of the first portion 120C of the torque shaft 120 relative to the second portion 120D of the torque shaft 120. This angular displacement, which is an elastic deformation, is indicative of the torque reacted by the torque shaft 120.

Conductors 140C connect sensing element 140D (e.g., a sensor) to an on-board controller 141, such as an engine control unit (ECU), for monitoring the phonic wheel 140, to identify the torque reacted by the torque shaft 120. The conductors 140C may travel via a conduit 142 that extends through the housing 210. A sensor 140D is used to generate a signal from the passing, i.e., the relative motion, of the interlacing teeth 140T. The phase shift or phase difference between the signals of the individual interlacing teeth 140T is interpreted by the engine control unit 141 to determine the relative deformation and, from that, the torque. An example probe is a variable reluctance sensor. The disclosed probe is not intended on limiting the scope of the disclosure. In one embodiment, a sensing element 140D is provided at the end of the conductors 104C. Together, the phonic wheel 140, the controller 141, the conduit 142, conductors 142 and sensing element 140D are referred to as a phase shift measuring system.

According to the embodiments, a bearing-gear spacing 320 is defined between the gear mesh plane 127 and the power turbine shaft bearing 180. The bearing-gear spacing 320 is shorter than in a conventional turboshaft gearbox output gear arrangement due to the above disclosed features. Within the relatively short axial distance of the bearing-gear spacing 320, the arrangement 100 includes the aft gear shaft bearing 220, the phonic wheel 140 and the cooling air passage 170. That is, the system is compact, cost efficient and light weight.

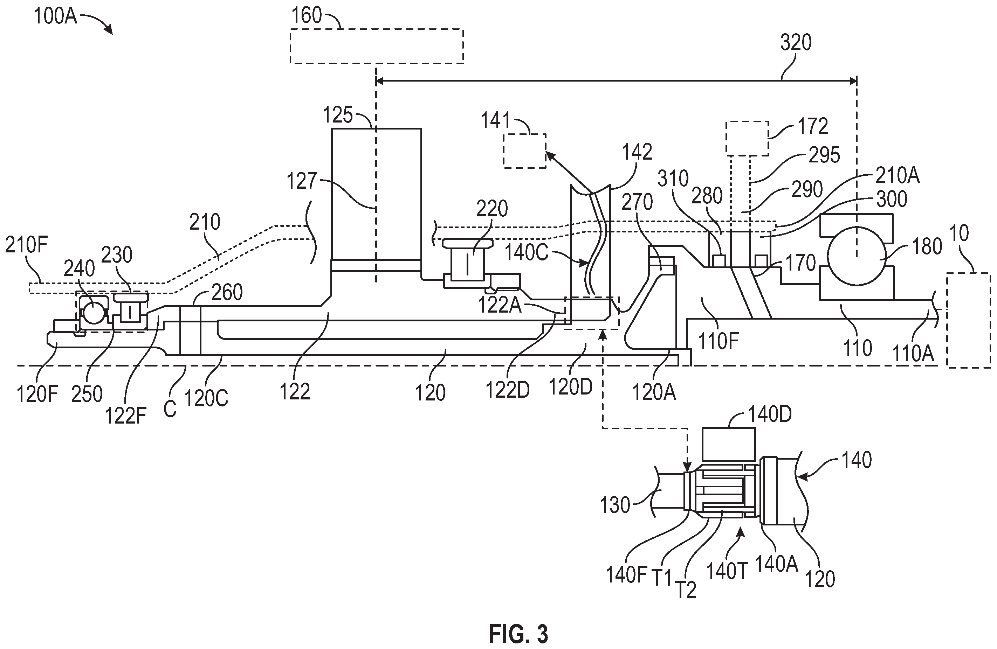

Turning to FIG. 3, another embodiment is illustrated of the turboshaft gearbox output gear arrangement 100A (a second arrangement or system), illustrated about its center axis C. The arrangement 100A includes a power turbine shaft 110. A torque shaft 120 is driven by the power turbine shaft 110. A gear shaft 122 is driven by the torque shaft 120. A mating gear 125 is driven by the gear shaft 122. The mating gear 125 defines a gear mesh middle plane 127.

Sensing element 140D engages phonic wheel 140 which is formed by the teeth from the gear shaft 122 and the torque shaft 120 to measure twist in torque shaft 120. Relative angular displacement of the teeth from the gear shaft 122 and the torque shaft 120 is indicative of torque reacted in the torque shaft 120. The power turbine shaft 110 is driven by an engine 10, which may be a gas turbine engine utilized in an aerospace application, and the mating gear 125 drives a rotor 160.

The power turbine shaft 110 defines aft end 110A and a forward end 110F. The aft end 110A of the power turbine shaft 110 is driven by the engine 10. The forward end 110F of the power turbine shaft 110 is coupled to the torque shaft 120. A cooling air passage 170 is located between the phonic wheel 140 and the power turbine shaft bearing 180. The cooling air passage 170 extends radially through the power turbine shaft 110. A power turbine shaft bearing 180 is seated against the power turbine shaft 110. Specifically, the power turbine shaft bearing 180 is seated axially between the cooling air passage 170 and the aft end of the power turbine shaft 110. The torque shaft 120 defines an aft end 120A and a forward end 120F. The aft end 120A of the torque shaft 120 is coupled to the forward end 110F of the power turbine shaft 110. The forward end 120F of the torque shaft 120 is forward of the mating gear 125.

The gear shaft 122 defines an aft end 122A and a forward end 122F. The forward end 122F of the gear shaft 122 is coupled to a first portion 120C of the torque shaft 120 that is axially forward of the mating gear 125. The aft end 122A of the gear shaft 122 is engaged with a second portion 120D of the torque shaft 120 that is axially aft of the mating gear 125. That is, as compared with the embodiment of FIG. 2, the gear shaft 122, or at least a portion 122D of the aft end 122A of the gear shaft 122, is configured as a reference tube portion, similar to the reference tube 130 of FIG. 2, which can rotate as the gear shaft 122 moves with the twist of the torque shaft 120. The forward end 122F of the gear shaft 122 and the forward end 120F of the torque shaft 120 are forward of the forward shaft coupling 260. That is, they are fixedly coupled, axially, radially and circumferentially.

A housing 210 surrounds the torque shaft 120 and extends from a forward end 210F to an aft end 210A. That is, the housing surrounds the arrangement 100A. As shown in the figure, the housing 210 is interrupted, i.e., it has an aperture, for the gear shaft 122 and the mating gear 125 to mesh, i.e. for the mating gear 125 to be driven by the gear shaft 122. The forward end 210F of the housing 210 is axially forward of the forward bearings 230, 240. The aft end 210A of the housing 210 is aft of the cooling air passage 170 and forward of the power turbine shaft bearing 180. An aft gear shaft bearing 220 is located axially aft of the mating gear 125 and radially between the aft end 122A of the gear shaft 122 and the housing 210. The bearing 220 is forward of the phonic wheel 140. Another housing supports the power turbine bearing 180 in FIGS. 2 and 3. The description of the housing 210 is not intended on limiting the scope of the embodiments.

In one embodiment, a first forward gear shaft bearing 230 is located radially between the forward end 122F of the gear shaft 122 and the housing 210. The first forward gear shaft bearing 230 may be a roller bearing. In one embodiment, a second forward gear shaft bearing 240 is located radially between the forward end 122F of the gear shaft 122 and the housing 210, and axially forward of the first forward gear shaft bearing 230. The second forward gear shaft bearing 240 may be a ball bearing. The second forward gear shaft bearing 240 may be required if the gear shaft 122 is subjected to axial loading. The first forward gear shaft bearing 230 and second forward gear shaft bearing 240 can be installed on the gear shaft 122 or the torque shaft 120. The first forward gear shaft bearing 230 and the second forward gear shaft bearing 240 may be located anywhere between gear mesh plane 127 and the torque shaft forward end 120F. The first forward gear shaft bearing 230 and aft gear shaft bearing 220 are on each axial side of the gear mesh plane 127 and provide radial support. In one embodiment, the first forward gear shaft bearing 230 and second forward gear shaft bearing 240 are a single forward bearing 250 (shown schematically), such as a ball bearing.

In one embodiment, the forward end 122F of the gear shaft 122 and the forward end 120F of the torque shaft 120 are coupled via a forward shaft coupling 260. The forward shaft coupling 260 may be a pin. The forward shaft coupling 260 is located axially forward of the gear mesh plane 127 and aft of the first and second forward gear shaft bearings 230, 240, and transfers torque to the gear shaft 122. In one embodiment, the aft end 120A of the torque shaft 120 and the forward end 110F of the power turbine shaft 110 are coupled via an aft shaft coupling 270. The aft shaft coupling 270 may be a spline. The aft shaft coupling 270 transmits torque from the power turbine shaft 110 to the torque shaft 120. This configuration is not intended on limiting the scope of the embodiments. The coupling 260, for example, could be forward of the bearings 230, 240.

In one embodiment, a seal housing 280 extends radially between the power turbine shaft 110 and the housing 210 and is axially aligned, i.e., located over, the cooling air passage 170. The housing 210 defines an aperture 290 and the seal housing 280 defines a housing air passage 300 that are axially aligned. Dynamic sealing elements 310 such as controlled gaps, lip seals, etc., or an o-ring, may provide a seal between the seal housing 280 that is static (not rotating) and the power turbine shaft 110 that is rotating. In case of seals using a controlled gap, small amount of air would be leaking on each side of the seal elements. An air tube 295 may extend away from the aperture 290. With this configuration, pressurized air, e.g., from a pressurized air source 172, is capable of being delivered through the cooling air passage 170 to cool the engine 10, and provide sealing air in the case of a controlled gap seal.

According to the embodiments, the phonic wheel 140 includes an aft portion 140A connected to the second portion 120D of the torque shaft 120. A forward portion 140F of the phonic wheel 140 is connected to the aft end 122A of the gear shaft 122, i.e., to the reference tube portion 122D, which does not deform from torque (i.e. it is not subject to torque along a gear shaft portion between the mesh plane 127 and the gear shaft aft end 122A). In one embodiment the forward portion 140F the phonic wheel 140 is formed as part of the aft end 122A of the gear shaft 122, i.e., as part of the reference tube portion 122D. The forward portion 140F and aft portion 140A of the phonic wheel 140 has interlacing teeth 140T (i.e., forming a phonic wheel) that are axially engaged, e.g., teeth T1 and teeth T2. Relative angular movement between the teeth 140T is indicative of rotation of the reference tube portion 122D of the gear shaft 122, and twist of the first portion 120C of the torque shaft 120 relative to the second portion 120D of the torque shaft 120. This angular displacement, which is an elastic deformation, is indicative of the torque reacted by the torque shaft 120. In one embodiment, a sensing element 140D is provided at the end of the conductors 140C. Together, the phonic wheel 140, the controller 141, the conduit 142, conductors 142 and sensing element 140D are referred to as a phase shift measuring system.

Conductors 140C connect the sensing element 140D to an on-board controller 141, such as an engine control unit (ECU), for monitoring the phonic wheel 140, to identify the torque reacted by the torque shaft 120. The conductors 140C may travel via a conduit 142 that extends through the housing 210. The sensing element 140D is used to generate a signal from the passing, i.e., the relative motion, of the interlacing teeth 140T. The phase shift or phase difference between the signals of the individual interlacing teeth 140T is interpreted by the engine control unit 141 to determine the relative deformation and, from that, the torque. An example probe is a variable reluctance sensor. The disclosed probe is not intended on limiting the scope of the disclosure.

According to the embodiments, a bearing-gear spacing 320 is defined between the gear mesh plane 127 and the power turbine shaft bearing 180. The bearing-gear spacing 320 is shorter than in a conventional turboshaft gearbox output gear arrangement due to the above disclosed features. Within the relatively short axial distance of the bearing-gear spacing 320, the aft gear shaft bearing 220, the phonic wheel 140 and the cooling air passage 170. That is, the system is compact, cost efficient and light weight.

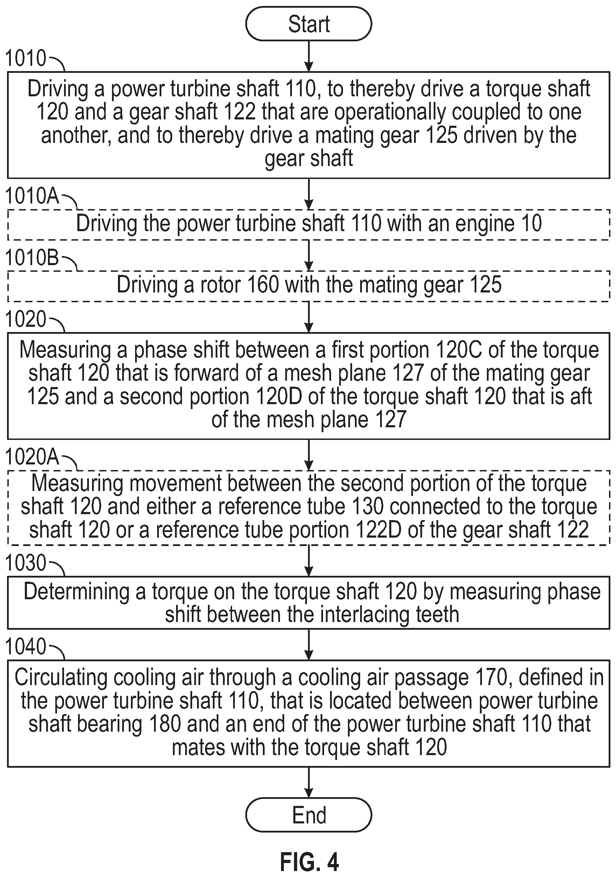

Turning to FIG. 4, a flowchart shows a method of operating a turboshaft gearbox output gear arrangement 100 (100A). Boxes in dashed lines in the flowchart represent further explanations, including alternative embodiments, of one or more preceding steps and are not intended to limit the scope of the embodiments.

As shown in block 1010, the method includes driving a power turbine shaft 110, to thereby drive a torque shaft 120 and a gear shaft 122 that are operationally coupled to one another, and to thereby drive a mating gear 125 driven by the gear shaft 122. As shown in block 1010A, driving the power turbine shaft 110 (block 1010) includes driving the power turbine shaft 110 with an engine 10. As shown in block 1010B, driving the power turbine shaft 110 (block 1010) includes driving a rotor 160 through the mating gear 125.

As shown in block 1020, the method includes measuring a phase shift between a first portion 120C of the torque shaft 120 that is forward of a gear mesh plane 127 of the mating gear 125 and a second portion 120D of the torque shaft 120 that is aft of the gear mesh plane 127, utilizing a phonic wheel 140. As shown in block 1020A, measuring the phase shift between the first portion 120C and the second portion 120D of the torque shaft 120 (block 1020) includes measuring movement between the second portion of the torque shaft 120 and either a reference tube 130 connected to the torque shaft 120 or a reference tube portion 122D of the gear shaft 122. As shown in block 1030, the method includes determining a torque by measuring phase shift between the interlacing teeth.

As shown in block 1040, the method includes circulating cooling air through a cooling air passage 170, defined in the power turbine shaft 110, where the cooling air passage 170 is aft of the interlacing teeth or phonic wheel. The cooling air passage 170 is located between power turbine shaft bearing 180 and an end of the power turbine shaft 110 that mates with the torque shaft 120.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A turboshaft gearbox output gear arrangement (100) of a gas turbine engine (10), comprising:
a power turbine shaft (110);
a torque shaft (120), driven by the power turbine shaft (110), extending from a forward end (120F) to an aft end (120A);
a gear shaft (122), driven by the torque shaft (120);
a mating gear (125), driven by the gear shaft (122), wherein the mating gear (125) and gear shaft (122) define a gear mesh plane (127);
a reference tube (130), coupled to the torque shaft (120), extending from a forward end (130F) to an aft end (130A), wherein the forward and aft ends of the reference tube (130) and torque shaft (120) extend along each side of the gear mesh plane (127); and
a sensor (140D) that engages the reference tube (130) and the torque shaft (120) to measure twist in the torque shaft (120), wherein angular movement of the reference tube (130) relative to the torque shaft (120) is indicative of torque reacted in the torque shaft (120).

2. The arrangement (100) of claim 1, wherein the power turbine shaft (110) defines:
an aft end (110A) that is configured to be drivable by an engine (10);
a forward end (110F) that is coupled to the torque shaft (120);
a cooling air passage (170), located between the aft end (110A) and the forward end (110F) of the power turbine shaft (110), extending radially through the power turbine shaft (110).

3. The arrangement (100) of claim 2, comprising:
a power turbine shaft bearing (180) seated against the power turbine shaft (110), between the cooling air passage (170) and the aft end (110A) of the power turbine shaft (110).

4. The arrangement (100) of claim 2 or 3, further including:
a phonic wheel (140) having interlacing teeth (140T) that couples the aft end (130A) of the reference tube (130) and the torque shaft (120),
wherein:
the sensor (140D) engages the interlacing teeth (140T) of the phonic wheel (140),
the aft end (120A) of the torque shaft (120) is coupled to the forward end (110F) of the power turbine shaft (110);
the forward end (120F) of the torque shaft (120) is forward of the mating gear (125);
the gear shaft (122) extends from a forward end (122F) to an aft end (122A), wherein the aft end (122A) of the gear shaft (122) is forward of the phonic wheel (140) or interlacing teeth (140T);
the torque shaft (120) and the gear shaft (122) are coupled to each other forward of the mesh plane (127) or mating gear (125);
a radial shaft gap (190) is defined between the aft end (120A) of the torque shaft (120) and the aft end (122A) of the gear shaft (122); and
the reference tube (130) is located within the radial shaft gap (190).

5. The arrangement (100) of claim 4, wherein the reference tube (130) extends between:
a forward end (130F) that is within the radial shaft gap (190) and connected to a first portion (120C) of the torque shaft (120) that is forward of the mating gear (125); and
an aft end (130A) that is axially aft of the aft end (122A) of the gear shaft (122) and axially aligned with a second portion (120D) of the torque shaft (120) that is aft of the mating gear (125),
wherein the aft end (130A) of the reference tube (130) and the second portion (120D) of the torque shaft (120) are engaged via the interlacing teeth (140T) of the phonic wheel (140).

6. The arrangement (100) of claim 5, wherein
the forward end (130F) of the reference tube (130) and the first portion (120C) of the torque shaft (120) are connected to each other.

7. A turboshaft gearbox output gear arrangement (100) of a gas turbine engine (10), comprising:
a power turbine shaft (110);
a torque shaft (120), extending from a forward end (120F) to an aft end (120A), driven by the power turbine shaft (110);
a gear shaft (122), extending from a forward end (122F) to an aft end (122A), driven by the torque shaft (120);
a mating gear (125), driven by the gear shaft (122), wherein the mating gear (125) defines a gear mesh plane (127), and wherein the forward and aft ends of the torque and gear shafts extend on each side of the gear mesh plane (127); and
a sensor (140D) that engages the gear shaft (122) and the torque shaft (120) to measure twist in the torque shaft (120), wherein angular movement of the gear shaft (122) relative to the torque shaft (120) is indicative of torque reacted in the torque shaft (120).

8. The arrangement (100) of claim 7, wherein the power turbine shaft (110) defines:
an aft end (110A) that is configured to be drivable by an engine (10);
a forward end (110F) that is coupled to the torque shaft (120); and
a cooling air passage (170), located between the aft end (110A) and the forward end (110F) of the power turbine shaft (110), extending radially through the power turbine shaft (110),
optionally wherein the arrangement comprises a power turbine shaft bearing (180) seated against the power turbine shaft (110), between the cooling air passage (170) and the aft end (110A) of the power turbine shaft (110).

9. The arrangement (100) of claim 8, further including:
a phonic wheel (140) having interlacing teeth (140T) that couples the aft end (122A) of the gear shaft (122) and the torque shaft (120),
wherein:
the sensor (140D) engages at the interlacing teeth (140T) of the phonic wheel (140),
the aft end (120A) of the torque shaft (120) is coupled to the power turbine shaft (110);
the forward end (120F) of the torque shaft (120) is forward of the mating gear (125);
the aft end (122A) of the gear shaft (122) engages the aft end (120A) of the torque shaft (120) via the interlacing teeth (140T) of the phonic wheel (140); and
the torque shaft (120) and the gear shaft (122) are coupled to each other forward of the mesh plane (127) or mating gear (125).

10. The arrangement (100) of any of claims 4 to 6, or 9, comprising:
a first forward gear shaft bearing (230) located axially forward of the mating gear (125) and forward of the phonic wheel (140); and
an aft gear shaft bearing (220) located axially aft of the mating gear (125) and forward of the phonic wheel (140).

11. The arrangement (100) of claim 10, comprising:
a housing (210) surrounding the torque shaft (120) and extending from a forward end (210F) that is forward of the first forward gear shaft bearing (230) and an aft end (210A) that is aft of the cooling air passage (170).

12. The arrangement (100) of any preceding claim, comprising at least one of:
an engine (10) that drives the power turbine shaft (110); and
a rotor (160), driven by the mating gear (125).

13. A method of operating a turboshaft gearbox output gear arrangement (100) of a gas turbine engine (10), comprising:
driving a power turbine shaft (110), to thereby drive a torque shaft (120) and a gear shaft (122) that are operationally coupled to one another, and to thereby drive a mating gear (125) driven by the gear shaft (122);
measuring a phase shift between a first portion (120C) of the torque shaft (120) that is forward of a mesh plane (127) of the mating gear (125) and a second portion (120D) of the torque shaft (120) that is aft of the mesh plane (127) utilizing a sensor (140D); and
determining a torque on the torque shaft (120) from the phase shift, optionally wherein driving the power turbine shaft (110) further includes at least one of:
driving the power turbine shaft (110) with a gas turbine engine (10); and
driving a rotor (160) through the mating gear (125).

14. The method of claim 13, wherein measuring the phase shift between the first portion (120C) and the second portion (120D) of the torque shaft (120) includes measuring relative angular displacement between the second portion (120D) of the torque shaft (120) and either a reference tube (130) connected to the torque shaft (120) or a reference tube portion (122D) of the gear shaft (122).

15. The method of claim 13 or 14, including circulating cooling air through a cooling air passage (170), defined in the power turbine shaft (110), that is located between power turbine shaft bearing (180) and an end of the power turbine shaft (110) that mates with the torque shaft (120).
